# EUROPEAN PATENT SPECIFICATION

(11) **EP 2 629 618 B1**
(45) Date of publication and mention of the grant of the patent: **13.05.2015**
(21) Application number: 11773260.2
(22) Date of filing: 21.10.2011
(51) Int. Cl.: A01P 3/00, A01N 25/04, A01N 25/30, A01N 45/02

(54) **AGROCHEMICAL CONCENTRATES CONTAINING ISOPYRAZAM**
AGROCHEMISCHE KONZENTRATE ENTHALTEND ISOPYRAZAM
CONCENTRÉS AGROCHIMIQUES CONTENANT DE L'ISOPYRAZAM

(30) Priority: 21.10.2010 EP 10188309
(43) Date of publication of application: 28.08.2013
(73) Proprietor: Syngenta Limited, Guildford Surrey GU2 7YH (GB)
(72) Inventor: STOCK, David, Bracknell Berkshire RG42 6EY (GB); PERRY, Richard, Brian, Bracknell Berkshire RG42 6EY (GB); RAMSAY, Julia, Lynne, Bracknell Berkshire RG42 6EY (GB); BELL, Gordon, Alastair, Bracknell Berkshire RG42 6EY (GB)
(74) Representative: Syngenta International AG
(86) International application number: PCT/EP2011/068433
(87) International publication number: WO 2012/052544

(56) References cited:
- WO-A1-2006/037632
- WO-A2-2010/046378

## Description

The present invention relates to compositions containing Isopyrazam, as well as methods of making and using the compositions.

Bioactive agrochemicals are usually sold as concentrated formulations and prior to use they are diluted with water and subsequently applied to plants, e.g. by spraying. Such formulations may include ingredients in addition to the agrochemical active ingredient to improve the product, e.g. to assist with dispersion of the agent in solution, to improve plant up-take of the agent, to improve the bioactivity of the agent, or to improve shelf-life etc..

There are a number of different types of formulation that are commonly used with bioactive agrochemicals. These include soluble concentrates (SL), emulsifiable concentrates (EC), suspension concentrates (SC), oil-in-water emulsion (EW), water-dispersible power (WP), water-dispersible granule (WG), suspoemulsion (SE) and microcapsule suspension (CS).

Some types of formulation, particularly formulations other than emulsifiable concentrates, benefit greatly from the presence of an adjuvant, i.e. an agent used to enhance the bioperformance (activity) of the bioactive agrochemical. Adjuvants can vary greatly in complexity from simple surfactants to multi-component blended oils.

Isopyrazam is a fungicidally active crop protection product and is described for example in WO 04/035589 and WO 06/005612. Isopyrazam has the structure:

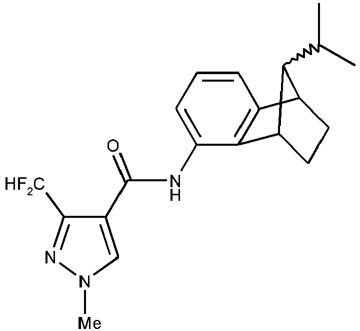

Surprisingly, we have now found that the efficacy of Isopyrazam is improved by use with adjuvants containing alkoylated fatty chains, e.g. compared to other commonly used adjuvants, and in particular those described below.

Accordingly, in a first aspect the invention provides a composition comprising
a) an adjuvant, which adjuvant is an alkoxylated fatty acid or an alkoxylated fatty alcohol, which adjuvant has the formula I;

   R¹-(CO)ₚ-Z-[-R²O-]_{q}-R³ (I)

   wherein
   Z is O;
   R¹ is C₈-C₂₀ alkyl or C₈-C₂₀ alkenyl;
   each R² is independently C₂-C₄ alkyl;
   R³ is C₁-C₈ alkyl;
   p is 0 or 1; and
   q is 2 to 40; and
b) Isopyrazam.

Preferably the composition is an aqueous agrochemical concentrate, e.g. a suspension concentrate.

Z is O. Preferably, R³ is preferably butyl.

More preferably, the adjuvant is one wherein: Z is O, R¹ is C₈-C₂₀ alkyl or C₈-C₂₀ alkenyl; R² is ethyl; R³ is C₁-C₈ alkyl; p is 0; and q is 2 to 40.

More preferably, the adjuvant is one wherein: Z is O, R¹ is C₁₆-C₂₀ alkyl or C₁₆-C₂₀ alkenyl; R² is ethyl; R³ is butyl; p is 0; and q is 5 to 30.

Usually the adjuvant will be a blend of the molecules, e.g. in which Z, R¹, R², R³, q and p may have different values. For example, at least 50, 60, 70, 80, 90, or even 100% of the adjuvant molecules in the composition may be molecules according to formula I. For example, at least 50, 60, 70, 80, 90, or even 100% of the adjuvant molecules may be molecules in which R³ is C₁-C₈ alkyl. In particular, there will usually be a distribution of alkylene oxide chain lengths. Preferably the average value of q is 10 to 25, more preferably 18 to 22, even more preferably about 20. The term "average" refers to the mode average. At least 50, 60, 70, 80, 90, or even 100% of the adjuvant molecules in the composition may be molecules in which: Z is O, R¹ is C₁₆-C₂₀; R² is ethyl; R³ is butyl; p is 0; and q is an average of 18-22.

A high adjuvant concentration may be desirable in order to increase the efficacy of Isopyrazam. For example, the adjuvant may be present in aqueous agrochemical concentrates at at least 50g/l, at least 100g/l, at least 180g/l, or at least 230g/l. For example, the adjuvant may be 50 - 800 g/l of the aqueous agrochemical concentrate, e.g. 100 - 500 g/l, e.g. 150 - 400 g/l.

Adjuvants of the present invention may be prepared by conventional techniques, e.g. as described in WO 03/022048.

The composition is preferably a suspension concentrate (SC) formulation, e.g. an aqueous suspension of finely divided insoluble solid particles of the agrochemical active ingredient. SC formulations may be prepared by ball or bead milling a solid agrochemical active ingredient in a suitable medium to produce a fine particle suspension of the agrochemical active ingredient. The particle size is typically from 0.2-15 microns, for example from 0.5 to 5 microns median diameter. The agrochemical active ingredient may be combined with other formulation ingredients and added to water, or it may be added to water already containing other formulation ingredients.

The composition may contain other ingredients found in commercial agrochemical formulations, e.g. surfactants, dispersants, polymers, wetting agents, other adjuvants stabilizers, pH modifiers, anti-freeze agents, suspending agents, emulsifiers, antifoam agents, pH stabilising agents, preservatives and the like.

In a further aspect, the invention provides a method of increasing the efficacy of Isopyrazam, comprising using an adjuvant as defined herein with Isopyrazam. The method may comprise including Isopyrazam and the adjuvant in the same composition. The composition may be an aqueous agrochemical concentrate or may be a composition prepared by the end user, e.g. by mixing in a spray tank. Alternatively, the method may comprise applying Isopyrazam and the adjuvant separately to the target of interest. The target of interest will usually be plants, plant parts, the locus thereof.

In a further aspect, the invention provides use of an adjuvant as defined herein as an adjvuant for Isopyrazam.

In a further aspect, the invention provides a method comprising diluting in a spray tank the composition as defined herein.

In a further aspect the invention provides a method of controlling or preventing infestation of plants by phytopathogenic microorganisms by application of Isopyrazam and an adjuvant as defined herein to the plants, parts of the plants, or the locus thereof. The adjuvant and Isopyrazam may be applied to the target of interest separately or simultaneously, e.g. by being present in the same composition.

In a further aspect, the invention provides a method of controlling or preventing infestation of plants by phytopathogenic microorganisms by application of a composition of the invention to the plants, parts of the plants, or the locus thereof.

Preferably the phytopathogenic microorganisms are fungal organisms.

It will be understand that alkyl and alkenyl chains may be branched or unbranched and that the adjuvants of the invention may be derived from both natural and synthetic sources.

Isopyrazam exists as four stereoisomers as described in WO 06/005612 and WO2008/113447. The invention may be performed using any ratio of the four isomers.

All aspects and preferred features of the invention may be combined with each other, except where this is evidently not possible.

### Examples

The test data relate to curative testing against Septoria tritici on wheat. The wheat plants in pots are inoculated 3 to 5 days prior to spraying as indicated. The isopyrazam is formulated as an aqueous suspension concentrate formulation containing 250 g/l of isopyrazam. The suspension concentrate formulation is diluted to the concentrations of isopyrazam shown in the Tables with water prior to spraying. When adjuvant is included it is used at 0.1 %w/v in the spray dilution unless otherwise indicated. An inert non-adjuvant additive is included in all treatments to provide spray retention. The spray application is 200l/ha.

Three assessments are made per pot of wheat with 4 replicate pots fully randomised. The three replicate pots are visually assessed and given a score of disease severity. The percent efficacy corresponds to the reduction in average disease severity in the treated pots compared to the untreated pots as a percentage of the average disease severity of the untreated pots. The results are shown in Tables 2 to 7 below. Each Table represents a side-by-side experiment.

**Table 1**

| **Adjuvant** | **Description** |
|---|---|
| 1 | Oleyl, 20 EO, butyl end capped |
| 2 | Ricinoleate ethoxylate 20EO |
| 3 | Ricinoleate ethoxylate 3EO |
| 4 | Glyceryl mono-oleate 5EO |
| 5 | Glyceryl mono-oleate 10EO |
| 6 | Sorbitan trioleate 20EO (Tween 85™) |
| 7 | Methyl oleate (non-ethoxylated methyl ester of oleic acid) |
| 8 | C16-17 alkyl alcohol ethoxylate 20EO |
| 9 | Oleyl alcohol 25EO (Genapol 250™) |
| 10 | C18-20 alkyl alcohol ethoxylate 20EO |
| 11 | Oleyl 10EO (Brij 96™) |
| 12 | Isotridecanol 5EO (Marlosol TA3050™) |
| 13 | Isotridecanol 9EO (Marlosol TA3090™) |

| | |
|---|---|
| EO = ethoxylate unit, the number of ethoxylate units indicated is a (mode) average value in each case. | |

**Table 2**

| Treatment was 4 days after inoculation, assessment was 18 days after inoculation. | | |
|---|---|---|
| **Adjuvant** | **Concentration of isopyrazam (mg per litre)** | **% Efficacy** |
| | | |
| - | 100 | 41 |
| - | 30 | 47 |
| - | 10 | 36 |
| - | 3 | 32 |
| | | |
| **1** | **100** | **98** |
| **1** | **30** | **84** |
| **1** | **10** | **84** |
| **1** | **3** | **54** |
| | | |
| 2 | 100 | 56 |
| 2 | 30 | 52 |
| 2 | 10 | 0.48 |
| 2 | 3 | 23 |
| | | |
| 3 | 100 | 86 |
| 3 | 30 | 47 |
| 3 | 10 | 55 |
| 3 | 3 | 29 |

**Table 3**

| Treatment was 4 days after inoculation, assessment was 17 days after inoculation. | | |
|---|---|---|
| **Adjuvant** | **Concentration of isopyrazam (mg per litre)** | **% Efficacy** |
| | | |
| - | 100 | 8.9 |
| - | 30 | 10 |
| - | 10 | -0.53 |
| - | 3 | 17.9 |
| | | |
| **1** | **100** | **90** |
| **1** | **30** | **74** |
| **1** | **10** | **50** |
| **1** | **3** | **27** |
| | | |
| 4 | 100 | 68 |
| 4 | 30 | 50 |
| 4 | 10 | 31 |
| 4 | 3 | 16 |
| | | |
| 5 | 100 | 50 |
| 5 | 30 | 41 |
| 5 | 10 | 15 |
| 5 | 3 | 13 |
| | | |
| 6 | 100 | 58 |
| 6 | 30 | 42 |
| 6 | 10 | 32 |
| 6 | 3 | 8.4 |

**Table 4**

| Treatment was 4 days after inoculation, assessment was 18 days after inoculation. Adjuvants 7 and 8 were used at 0.2%w/v in the spray dilution. | | |
|---|---|---|
| **Adjuvant** | **Concentration of isopyrazam (mg per litre)** | **% Efficacy** |
| | | |
| - | 100 | 25 |
| - | 30 | 29 |
| - | 10 | 39 |
| - | 3 | 41 |
| | | |
| **1** | **100** | **96** |
| **1** | **30** | **85** |
| **1** | **10** | **77** |
| **1** | **3** | **57** |
| | | |
| 7 | 100 | 98 |
| 7 | 30 | 66 |
| 7 | 10 | 21 |
| 7 | 3 | 21 |
| | | |
| 8 | 100 | 86 |
| 8 | 30 | 78 |
| 8 | 10 | 32 |
| 8 | 3 | 21 |

**Table 5**

| Treatment was 3 days after inoculation, assessment was 19 days after inoculation. | | |
|---|---|---|
| **Adjuvant** | **Concentration of isopyrazam (mg per litre)** | **% Efficacy** |
| | | |
| - | 100 | 0.59 |
| - | 30 | 14 |
| - | 10 | 9.4 |
| - | 3 | 8.8 |
| | | |
| **1** | **100** | **96** |
| **1** | **30** | **90** |
| **1** | **10** | **72** |
| **1** | **3** | **25** |
| | | |
| 9 | 100 | 75 |
| 9 | 30 | 59 |
| 9 | 10 | 31 |
| 9 | 3 | 22 |
| | | |
| 10 | 100 | 91 |
| 10 | 30 | 81 |
| 10 | 10 | 53 |
| 10 | 3 | 6.5 |

**Table 6**

| Treatment was 4 days after inoculation, assessment was 17 days after inoculation. Adjuvant 7 was used at 0.2%w/v in the spray dilution. | | |
|---|---|---|
| **Adjuvant** | **Concentration of isopyrazam (mg per litre)** | **% Efficacy** |
| | | |
| - | 100 | 14 |
| - | 30 | 19 |
| - | 10 | 6.8 |
| - | 3 | 9.1 |
| | | |
| **1** | **100** | **98** |
| **1** | **30** | **87** |
| **1** | **10** | **60** |
| **1** | **3** | **39** |
| | | |
| 7 | 100 | 95 |
| 7 | 30 | 95 |
| 7 | 10 | 44 |
| 7 | 3 | 25 |
| | | |
| 11 | 100 | 97 |
| 11 | 30 | 94 |
| 11 | 10 | 38 |
| 11 | 3 | 6.8 |

**Table 7**

| Treatment was 4 days after inoculation, assessment was 18 days after inoculation. | | |
|---|---|---|
| **Adjuvant** | **Concentration of isopyrazam (mg per litre)** | **% Efficacy** |
| | | |
| - | 100 | 32 |
| - | 30 | -18 |
| - | 10 | 15 |
| - | 3 | 5.1 |
| | | |
| **1** | **100** | **99** |
| **1** | **30** | **89** |
| **1** | **10** | **47** |
| **1** | **3** | **53** |
| | | |
| 12 | 100 | 71 |
| 12 | 30 | 12 |
| 12 | 10 | 2.2 |
| 12 | 3 | -19 |
| | | |
| 13 | 100 | 95 |
| 13 | 30 | 75 |
| 13 | 10 | 35 |
| 13 | 3 | 23 |

The results show that efficacy of Isopyrazam is superior when combined with end capped alkoxylated adjuvants. (In compounds of formula I the group R³ represents an "end cap" to the terminal hydroxyl of the group [-R²O-]_{q}-H.)

## Claims

1. A composition comprising:
a) an adjuvant, which adjuvant is an alkoxylated fatty acid or alkoxylated fatty alcohol, which adjuvant has the formula I;
R¹-(CO)ₚ-Z-[-R²O-]_{q}-R³ (I)
wherein
Z is O;
R¹ is C₈-C₂₀ alkyl or C₈-C₂₀ alkenyl;
each R² is independently C₂-C₄ alkyl;
R³ is C₁-C₈ alkyl;
p is 0 or 1; and
q is 2 to 40; and
b) Isopyrazam.

2. A composition according to claim 1, wherein the composition is an aqueous agrochemical concentrate.

3. A composition according to claim 2, wherein the composition is a suspension concentrate.

4. A composition according to any one of claims 1 to 3, wherein R³ is butyl.

5. A composition according to any one of claims 1 to 3, wherein: Z is O, R¹ is C₈-C₂₀ alkyl or C₈-C₂₀ alkenyl; R² is ethyl; R³ is C₁-C₈ alkyl; p is 0; and q is 2 to 40.

6. A composition according to any one of claims 1 to 4, wherein Z is O, R¹ is C₁₆-C₂₀ alkyl or C₁₆-C₂₀ alkenyl; R² is ethyl; R³ is butyl; p is 0; and q is 5 to 30.

7. A composition according to any one of claims 1 to 4, wherein
Z is O; R¹ is C₁₆-C₂₀ alkyl or C₁₆-C₂₀ alkenyl; R² is ethyl; R³ is butyl; p is 0; and q is an average of 18-22.

8. A composition according to any one of claims 1 to 7, wherein the concentration of adjuvant in the composition is at least 100g/l.

9. A composition according to any one of claims 1 to 7, wherein the concentration of adjuvant in the composition is at least 180g/l.

10. A method of increasing the efficacy of Isopyrazam, comprising using an adjuvant as defined in any one of claims 1 to 9 as an adjuvant with Isopyrazam.

11. Use of an adjuvant as defined in any one of claims 1 to 9 as an adjvuant for Isopyrazam.

12. A method of controlling or preventing infestation of plants by phytopathogenic microorganisms by application of Isopyrazam and an adjuvant as defined in any one of claims 1 to 9 to the plants, parts of the plants, or the locus thereof.

13. A method of controlling or preventing infestation of plants by phytopathogenic microorganisms by application of a composition as defined in any one of claims 1 to 9 to the plants, parts of the plants, or the locus thereof.

## Patentansprüche

1. Zusammensetzung, umfassend:
a) ein Adjuvans, wobei es sich bei dem Adjuvans um eine alkoxylierte Fettsäure oder einen alkoxylierten Fettalkohol handelt, wobei das Adjuvans die Formel I aufweist
R¹-(CO)ₚ-Z-[-R²O-]_{q}-R³ (I) ;
wobei
Z für O steht;
R¹ für C₈-C₂₀-Alkyl oder C₈-C₂₀-Alkenyl steht;
R² jeweils unabhängig für C₂-C₄-Alkyl steht;
R³ für C₁-C₈-Alkyl steht;
p für 0 oder 1 steht; und
q für 2 bis 40 steht; und
b) Isopyrazam.

2. Zusammensetzung nach Anspruch 1, wobei es sich bei der Zusammensetzung um ein wässriges agrochemisches Konzentrat handelt.

3. Zusammensetzung nach Anspruch 2, wobei es sich bei der Zusammensetzung um ein Suspensionskonzentrat handelt.

4. Zusammensetzung nach einem der Ansprüche 1 bis 3, wobei R³ für Butyl steht.

5. Zusammensetzung nach einem der Ansprüche 1 bis 3, wobei: Z für O steht, R¹ für C₈-C₂₀-Alkyl oder C₈-C₂₀-Alkenyl steht; R² für Ethyl steht; R³ für C₁-C₈-Alkyl steht; p für 0 steht; und q für 2 bis 40 steht.

6. Zusammensetzung nach einem der Ansprüche 1 bis 4, wobei Z für O steht, R¹ für C₁₆-C₂₀-Alkyl oder C₁₆-C₂₀-Alkenyl steht; R² für Ethyl steht; R³ für Butyl steht; p für 0 steht; und q für 5 bis 30 steht.

7. Zusammensetzung nach einem der Ansprüche 1 bis 4, wobei
Z für O steht; R¹ für C₁₀-C₂₀-Alkyl oder C₁₆-C₂₀-Alkenyl steht; R² für Ethyl steht; R³ für Butyl steht; p für 0 steht; und q für einen Durchschnittswert von 18-22 steht.

8. Zusammensetzung nach einem der Ansprüche 1 bis 7, wobei die Konzentration des Adjuvans in der Zusammensetzung mindestens 100 g/l beträgt.

9. Zusammensetzung nach einem der Ansprüche 1 bis 7, wobei die Konzentration des Adjuvans in der Zusammensetzung mindestens 180 g/l beträgt.

10. Verfahren zum Erhöhen der Wirksamkeit von Isopyrazam, bei dem man ein wie in einem der Ansprüche 1 bis 9 definiertes Adjuvans als Adjuvans mit Isopyrazam verwendet.

11. Verwendung eines wie in einem der Ansprüche 1 bis 9 definierten Adjuvans als Adjuvans für Isopyrazam.

12. Verfahren zur Bekämpfung oder Prävention eines Befalls von Pflanzen durch phytopathogene Mikroorganismen durch Aufbringen von Isopyrazam und einem wie in einem der Ansprüche 1 bis 9 definierten Adjuvans auf die Pflanzen, auf Teile der Pflanzen oder deren Standort.

13. Verfahren zur Bekämpfung oder Prävention des Befalls von Pflanzen durch phytopathogene Mikroorganismen durch Aufbringen einer wie in einem der Ansprüche 1 bis 9 definierten Zusammensetzung auf die Pflanzen, auf Teile der Pflanzen oder deren Standort.

## Revendications

1. Composition comprenant :
a) un adjuvant, lequel adjuvant est un acide gras alcoxylé ou un alcool gras alcoxylé, lequel adjuvant répond à la formule I :
R¹-(CO)ₚ-Z-[-R²O-]_{q}-R³ (I)
dans laquelle
Z est O ;
R¹ est C₈-C₂₀ alkyle ou C₈-C₂₀ alcényle ;
chaque R² est indépendamment C₂-C₄ alkyle ;
R³ est C₁-C₈ alkyle ;
p vaut 0 ou 1 ; et
q va de 2 à 40 ; et
b) de l'isopyrazam.

2. Composition selon la revendication 1, **caractérisée en ce que** la composition est un concentré agrochimique aqueux.

3. Composition selon la revendication 2, **caractérisée en ce que** la composition est un concentré en suspension.

4. Composition selon l'une quelconque des revendications 1 à 3, **caractérisée en ce que** R³ est butyle.

5. Composition selon l'une quelconque des revendications 1 à 3, **caractérisée en ce que** : Z est O ; R¹ est C₈-C₂₀ alkyle ou C₈-C₂₀ alcényle ; R² est éthyle ; R³ est C₁-C₈ alkyle ; p vaut 0 ; et q va de 2 à 40.

6. Composition selon l'une quelconque des revendications 1 à 4, **caractérisée en ce que** : Z est O ; R¹ est C₁₆-C₂₀ alkyle ou C₁₆-C₂₀ alcényle ; R² est éthyle ; R³ est butyle ; p vaut 0 ; et q va de 5 à 30.

7. Composition selon l'une quelconque des revendications 1 à 4, **caractérisée en ce que** : Z est O ; R¹ est C₁₆-C₂₀ alkyle ou C₁₆-C₂₀ alcényle ; R² est éthyle ; R³ est butyle ; p vaut 0 ; et q vaut en moyenne 18-22.

8. Composition selon l'une quelconque des revendications 1 à 7, **caractérisée en ce que** la concentration en adjuvant dans la composition est d'au moins 100 g/l.

9. Composition selon l'une quelconque des revendications 1 à 7, **caractérisée en ce que** la concentration en adjuvant dans la composition est d'au moins 180 g/l.

10. Méthode d'augmentation de l'efficacité de l'isopyrazam, comprenant l'utilisation d'un adjuvant tel que défini selon l'une quelconque des revendications 1 à 9 comme adjuvant avec l'isopyrazam.

11. Utilisation d'un adjuvant tel que défini selon l'une quelconque des revendications 1 à 9, comme adjuvant pour l'isopyrazam.

12. Méthode de contrôle ou de prévention d'une infestation de plantes par des microorganismes phytopathogènes, par l'application d'isopyrazam et d'un adjuvant tel que défini selon l'une quelconque des revendications 1 à 9 aux plantes, à des parties des plantes, ou au lieu où elles se développent.

13. Méthode de contrôle ou de prévention d'une infestation de plantes par des microorganismes phytopathogènes, par l'application d'une composition telle que définie selon l'une quelconque des revendications 1 à 9 aux plantes, à des parties des plantes, ou au lieu où elles se développent.
